# EUROPÄISCHE PATENTSCHRIFT

(11) **EP 0 659 695 B1**
(45) Veröffentlichungstag und Bekanntmachung des Hinweises auf die Patenterteilung: **23.08.2000**
(21) Anmeldenummer: 94120631.0
(22) Anmeldetag: 23.12.1994
(51) Int. Cl.: C02F 11/02

(54) **Verfahren zum Aufbereiten von Klärschlamm**
Method for conditioning sewage sludge
Procédé pour le traitement des boues des eaux d'égou

(30) Priorität: 23.12.1993 DE 4344005; 11.02.1994 DE 4404393
(43) Veröffentlichungstag der Anmeldung: 28.06.1995
(73) Patentinhaber: Erich Kieserling GmbH + Co. KG, D-28199 Bremen (DE)
(72) Erfinder: Lenski, Volker, D-28213 Bremen (DE)
(74) Vertreter: Hoormann, Walter, Dr.-Ing.

(56) Entgegenhaltungen:
- WO-A-88/08037
- US-A- 4 127 447

## Beschreibung

Die Erfindung betrifft ein Verfahren zum Aufbereiten von aus einer Kläranlage abgetrenntem Klärschlamm mittels Zugabe von Tensiden, insbesondere biologisch abbaubaren Tensiden.

Abwasser-Kläranlagen bestehen heutzutage in der Regel aus einer mechanischen Reinigungsstufe und einer biologischen Reinigungsstufe. Dabei zählt man zur mechanischen Reinigungsstufe den sogenannten Rechen, den sogenannten Sandfang und das/die Vorklärbecken. Im Rechen werden grobe Verunreinigungen zurückgehalten, während sich im Sandfang (infolge einer Verringerung der Fließgeschwindigkeit des Abwassers) auch kleinere mineralische Bestandteile absetzen und in dem/den Vorklärbecken sonstige absetzbare Stoffe abgetrennt werden.

Das auf diese Weise mechanisch vorgereinigte Wasser gelangt anschließend in die sogenannte biologische Reinigungsstufe, in welcher diejenigen natürlichen Vorgänge - räumlich und zeitlich komprimiert - durchgeführt werden, die auch in Oberflächengewässern ablaufen. Hierzu ist eine erheblich höhere Bakterienkonzentration erforderlich, wobei die Bakterien für ihre Atmung (und Vermehrung) genügend Sauerstoff benötigen. Dieses wird im allgemeinen in kleineren kommunalen Kläranlagen durch sogenannte Tropfkörper erreicht, an denen eine Verrieselung erfolgt.

Bei dem sogenannten Belebungs- oder Belebtschlammverfahren wird das auf zubereitende Abwasser in relativ flache sogenannte Belebungsbecken (oder Behälter größerer Tiefe) geleitet und mit Mikroorganismenschlamm (Belebtschlamm) versetzt. Wird dabei (im allgemeinen mit Hilfe von Gebläsen, Rotoren oder anderen Belüftern) Luft oder Sauerstoff eingeleitet, so wandeln die Mikroorganismen (= Bakterien und andere Kleinlebewesen) den suspendierten, gelösten Schmutz in absetzbaren Schlamm und Kohlendioxid um, indem sie die Schmutzpartikel und gelösten Stoffe als Nährsubstrat in sich aufnehmen und durch rasche Vermehrung Zellklumpen bilden, die mit wachsendem Gewicht zu Boden sinken. Der entstehende und sich ansammelnde sog. Belebtschlamm wird regelmäßig in einem im allgemeinen als Nachklärbecken bezeichneten Absetzbecken vom gereinigten Wasser getrennt, wobei man das Wasser im allgemeinen in einen Vorfluter abfließen läßt.

Um beim Belebtschlammverfahren die für den Abbau/die Reinigung erforderlichen/erwünschten Mikroorganismen rasch und in ausreichender Menge zu erhalten, führt man Teile des im Nachklärbecken am Boden abgesetzten Belebtschlamms als sogenannten Rücklaufschlamm in das Belebungsbecken zurück, während der Überschußschlamm i. a. in sogenannten Faultürmen unter Mithilfe anaerober Bakterien ausgefault und letztlich entwässert wird, wobei beim Ausfaulen als Engiequelle verwendbares Methangas u. dgl. entsteht und der entwässerte Faulschlamm bis vor kurzem mit Hausmüll weiterverarbeitet oder in der Landwirtschaft eingesetzt wurde.

Bereits seit geraumer Zeit nimmt indes die Landwirtschaft regelmäßig allenfalls noch geringe Mengen von aufbereitetem Klärschlamm ab, weil dieser in zunehmendem Maße mit allen möglichen Verunreinigungen versehen ist, die zu einer Kontaminierung landwirtschaftlich genutzter Flächen führen. Dieses hat zur Folge, daß der Überschuß-Klärschlamm von Kläranlagen - soweit er nach seiner Entwässerung nicht ggf. zumindest teilweise mit Hausmüll weiterverarbeitet wird - deponiert werden muß. Dieses ist indes schon deshalb höchst problematisch, weil nach neueren Erhebungen der aus Kläranlagen stammende Überschuß-Klärschlamm in der Bundesrepublik Deutschland etwa 30 % (!) des gesamten Müllaufkommens bildet. Zudem sind bereits in 15 bis 20 Jahren 90 % der vorhandenen Deponiekapazitäten verfüllt. Neue Deponiestandorte sind in der dicht besiedelten Bundesrepublik kaum noch durchzusetzen.

Zahlreiche umfängliche Versuche, die Tag für Tag anfallenden Überschuß-Klärschlamm-Mengen in einem erheblichen Ausmaße zu reduzieren (oder möglichst weitgehend vollständig zu beseitigen), haben bisher zu keinen erheblichen Ergebnissen geführt.

Bei Tensiden (auch als Detergentien oder Surfactants bezeichnet) handelt es sich bekanntlich um oberflächenaktive bzw. grenzflächenaktive Substanzen, die aus einem hydrophilen und einem hydrophoben (lipophilen) Anteil bestehen, und die insbesondere als Waschmittel, aber auch als sogenannte Netzmittel, Emulgatoren, Dispergiermittel oder Flotationsmittel verwendet werden. Für eine Aufbereitung von Klärschlamm wurden Tenside bisher nur bei sehr speziellen Verfahren zur Entwässerung u. dgl. verwendet, zumal sie in erheblichem Umfang als toxisch gelten, und selbst bei nicht-toxischen, biologisch abbaubaren Tensiden im übrigen keine Veranlassung für einen Einsatz bestand.

Aus der US-A-4,127,447 ist ein Verfahren und eine Vorrichtung zum Abbauen z.B. von Klärschlamm in einem Bioreaktor bekannt. Hierbei ist vorgesehen, daß Mikroorganismen, die den Abbau der zu verarbeitenden Stoffe übernehmen, auf einem Träger innerhalb des Bioreaktors gehalten sind, und daß der mit einem Zellmembran zerstörenden Stoff (Detergens) versetzte Strom anaerob abgebaut wird, d.h. ohne Sauerstoff.

Bei dem bekannten Verfahren, bei dem die zugefügten Tenside abgestorbene Mikroorganismen lysieren, wird einstufig gearbeitet, und es müssen sämtliche entstehenden Mikroorganismen abgebaut werden, da ansonsten das System verstopft bzw. kollabiert.

Der vorliegenden Erfindung liegt die Aufgabe zugrunde, ein gattungsgemäßes Verfahren zu schaffen, mit dem die ständig anfallenden (Überschuß-) Klärschlammengen in kurzer Zeit ganz erheblich zu reduzieren bzw. weitgehend zu vernichten sind, wobei darüber hinaus bzw. alternativ die Raum-/Zeit-Ausbeute an brennfähigen Kohlenwasserstoffgasen aus aufbereitetem Restschlamm ggf. zu erhöhen sein soll bzw. hierfür erforderliche Anlagen in ihren Abmessungen erheblich zu verkleinern sein sollen, und überdies eine Möglichkeit geschaffen werden soll, aus dem Abfallprodukt (Klär-)Schlamm ein (möglichst hochwertiges) Endprodukt zu erstellen, welches bspw./insbesondere als Düngemittel, (Flüssig-)Futter u. dgl. dem Wirtschaftskreislauf (wieder) nutzbringend zuführbar ist.

Diese Aufgabe wird erfindungsgemäß durch das in Anspruch 1 angegebene Verfahren gelöst.

Es ist bekannt, daß es zu einer raschen Lysierung, also zu einem
"Aufplatzen" der im Überschuß-Schlamm enthaltenen Mikroorganismen kommt, deren Ausmaß durch die Tensidzugabe zu steuern ist. Diese aufgrund der Tensidbeimischung lysierten Mikroorganismen stellen einen hervorragenden Nährstoff für die überlebenden Mikroorganismen dar, und wenn als beizumischende Tenside allein biologisch abbaubare Tenside verwendet werden, sind auch diese durch die Mikroorganismen zu zersetzen. Hierdurch kann die insbesondere biologische Trockensubstanz (TS) des Klärschlamms in kurzer Zeit ganz erheblich reduziert werden, wobei sich gezeigt hat, daß eine etwa 50 %-ige Lysierung in einer Aufbereitungsstufe bezüglich der TS-Reduzierung zu besonders günstigen Ergebnissen führt.

Das erfindungsgemäße Verfahren wird mehrstufig durchgeführt, wobei der in einer ersten Lysier- oder Mineralisierungsstufe zu einem Bruchteil lysierte Klärschlamm (wenigstens teilweise) in eine zweite Lysier- oder Mineralisierstufe überführt wird und ihm dort erneut Tenside zugeführt werden, wonach der in der zweiten Lysier- oder Mineralisierstufe aufbereitete (und damit bereits z. B. zu 75 % lysierte/mineralisierte) Klärschlamm ggf. in eine dritte Stufe überführt wird u. s. f.

Bei einer bevorzugten Ausgestaltung des erfindungsgemäßen Verfahrens können die biologisch abbaubaren Tenside dem aufzubereitenden Klärschlamm zeitdosiert beigemischt werden. Die Tensidzuführung erfolgt dann nur während entsprechend gesteuerten Dosierzeiten t₁ bis tₙ und ist in der restlichen Zeit, d.h. zwischen zwei Dosierzeiten t₁ bis tₙ unterbrochen bzw. abgesperrt. Das in eine Lysierstufe weitergeleitete Schlamm-Tensid-Gemisch reagiert dort fortwährend, so daß der Anteil an lysierten Mikroorganismen zunimmt, bis es schließlich zu einer im wesentlichen vollständige Lysierung kommen kann.

Im Rahmen umfänglicher Entwicklungs- und Forschungsarbeiten hat sich gezeigt, daß es - je nach den vorliegenden Verhältnissen - durchschnittlich im allgemeinen ausreicht, dem auf zubereitenden Klärschlamm etwa bis zu 200 mg Tenside pro kg klärschlamm-Trockenmasse (TM) zuzufügen. Dabei ist eine Überdosierung zwar regelmäßig nicht schädlich, doch wird/sollte man im Hinblick auf die nicht unerheblichen Tensidkosten dennoch ersichtlich bemüht sein, eine Tensid-Überdosierung zu vermeiden.

Um die erstrebten Wirkungen zu optimieren, können die Tenside mit dem auf zubereitenden Klärschlamm unter Aufbringung von Scherkräften vermischt werden, weil dieses eine rasche Lysierung positiv beeinflußt.

Wenn zuvor von den "vorliegenden Verhältnissen" gesprochen worden ist, so sind hiermit die relevanten Einflußgrößen gemeint. Diese bestehen verständlicherweise in der Abwasserqualität/-zusammensetzung selbst (und damit auch der Art/den Arten der vorhandenen Mikroorganismen), weiterhin in den Abwasserinhaltsstoffen, dem Sauerstoffgehalt und - wie bereits erwähnt - ggf. eingebrachten Scherkräften. Es ist ohne weiteres ersichtlich, daß die je kg Klärschlamm-TM erforderliche Tensidmenge bei einer guten Belüftung bzw. gar einer Einleitung von Sauerstoff geringer sein kann. Demgemäß kann es auch höchst zweckmäßig sein, in wenigstens eine (vorzugsweise mehrere/alle) Lysierstufe(n) Sauerstoff (ggf. in Form von Luft) einzuleiten, und zwar bevorzugt weitgehend gleichmäßig.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
- Fig. 1:: Ein Ausführungsbeispiel einer Aufbereitungseinrichtung für (Überschuß-)Klärschlamm; und
- Fig. 2:: ein sich auf das erfindungsgemäße Verfahren beziehendes Blockdiagramm, aus dem bevorzugte Varianten besonders deutlich hervorgehen .

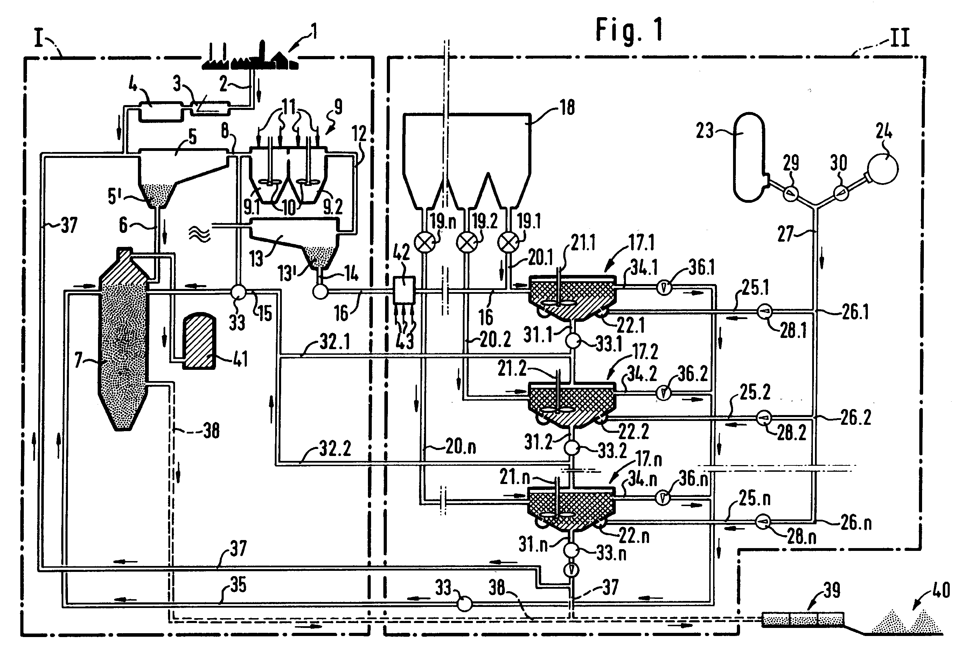

Fig. 1 zeigt (in schematischer Darstellung) ein mit einer strichpunktierten Linie eingerahmtes und mit I bezeichnetes (konventionelles) Klärwerk, welches mit einer Klärschlamm-Aufbereitungseinrichtung versehen ist, die in der Zeichnung ebenfalls mit einer strichpunktierten Linie eingerahmt und mit II bezeichnet ist.

Wie aus der Zeichnung ersichtlich ist, führt aus einer Kommune 1 eine Abwasser-Sammelleitung 2 zunächst zu einem Rechen 3 und von diesem zu einem Sandfang 4, von dem das insoweit vorgereinigte Abwasser einer weiteren mechanischen Vorklärungsstufe 5 zugeführt wird. Diese besteht aus einem Becken/Behälter, von dessen Sumpf 5' eine Verbindungsleitung 6 zu einem Faulturm 7 gelegt ist/sein kann.

Im wesentlichen verläßt das aufzubereitende Abwasser die Vorklärstufe 5 indes über eine Leitung 8 und gelangt in eine - im vorliegenden Falle zweistufige - biologische Reinigungsstüfe 9, wobei die beiden Becken/Behälter 9.1 und 9.2 der biologischen Reinigungsstufe 9 jeweils mit einem Rührwerk 10 versehen sind. Außerdem wird gemäß den Pfeilen 11 Luft in die biologische Reinigungsstufe 9 eingeblasen.

Aus der biologischen Reinigungsstufe 9 gelangt das auf zubereitende Abwasser über eine Leitung 12 in eine Nachklärstufe 13, die ebenfalls als Becken/Behälter ausgebildet ist.

Bei einem konventionellen Klärwerk gelangt der aufzubereitende Klärschlamm aus dem Sumpf 13' der Nachklärstufe 13 bzw. der dort angeschlossenen Auslaßleitung 14 über eine Leitung 15 in den oberen Endabschnitt des Faulturms 7. Dagegen wird gemäß der vorliegenden Erfindung der Inhalt der Nachklärstufe 13 über eine Leitung 16 einer ersten Lysierstufe 17.1 zugeleitet; wobei der ersten Lysierstufe 17.1 - wie auch dem Faulturm 7 - häufig ein Stabilisator vorgeordnet ist, in dem der aufzubereitende Klärschlamm durch Luftzufuhr stabilisiert wird, wie dieses bei dem vorliegenden Ausführungsbeispiel mit dem in der Leitung 16 angeordneten Stabilisator 42 der Fall ist, in dem Luft gemäß den Pfeilen 43 eingeführt wird. Auf dem Wege in die erste Lysierstufe 17.1 wird der aufzubereitende Klärschlamm aus einem Tensidvorrat 18 - über eine Dosiervorrichtung 19.1 - ein biologisch abbaubares Tensid zugeführt, und zwar jeweils ca. 185 mg Tensid/kg TM. Das dem über die Leitung 16 der ersten Lysierstufe 17.1 zugeführte Schlamm-Tensid-Gemisch, dem über eine Leitung 20.1 Tensid beigemischt worden ist, wird in der ersten Lysierstufe 17.1 mittels eines Rührwerkes 21.1 innig mit dem Tensid vermischt. Außerdem wird der Abwasser-Tensid-Mischung über eine am Boden der ersten Lysierstufe 17.1 angebrachte und mit ihrem Inneren über Düsen verbundene Ringleitung 22.1 aus einem Sauerstoffvorrat 23 Sauerstoff oder aber mittels eines Gebläses 24 Luft (und damit ebenfalls Sauerstoff) zugeführt, und zwar über eine Leitung 25.1, die bei 26 in eine "Sauerstoffleitung" 27 mündet, wobei in der Leitung 25.1 ein Absperrorgan 28.1 angeordnet ist, welches wahlweise zu schließen oder (ggf. teilweise) zu öffnen ist.

Je nach Zusammensetzung/Art des aufzubereitenden Abwassers bzw. der Abwasserinhaltsstoffe kann das Absperrorgan 28.1 und/oder das in der "Sauerstoffleitung" 27 befindliche Absperrorgan 29, welches in der Leitung zum Sauerstoffvorrat 23 angeordnet ist, und/oder das Absperrorgan 30, welches in der zum Gebläse führenden Leitung angeordnet ist, geschlossen oder (ggf. teilweise) geöffnet sein.

Aufgrund, einer entsprechend gesteuerten Tensidzugabe kommt es zu einer etwa 50 %igen Lysierung der in der ersten Lysierstufe 17.1 vorhandenen Mikroorganismen, d. h. also, daß diese "Aufplatzen" und damit abgetötet werden. Dieses beruht vermutlich auf dem Umstand, daß die Mikroorganismen bekanntlich "Dünnstellen" (Lipidstellen) aufweisen, an welche sich die Tenside letztlich mit der Wirkung anlagern, daß nicht nur Sauerstoff und Nährstoffe aufgrund der grenzflächenaktiven Tensidwirkung leicht in die Mikroorganismen eindringen können, sondern in einem Ausmaße/letztlich mit der Wirkung, daß sie Aufplatzen (= Lysieren).

Auf jeden Fall ist festzustellen, daß nach einer gewissen Reaktionszeit, die von den oben bereits erwähnten Einflußgrößen abhängt und ohne weiteres empirisch zu bestimmen ist, beim vorliegenden Ausführungsbeispiel aufgrund der entsprechend gesteuerten Tensidzugabe etwa 50 % der Mikroorganismen in der ersten Lysierstufe 17.1 "aufgeplatzt" (= lysiert) und damit abgestorben sind. Das Ausmaß der lysierten Mikroorganismen ist mit einer Kreuzschraffierung angedeutet, während das Ausmaß der noch lebenden Mikroorganismen in der ersten Lysierstufe 17.1 (wie auch in den nachfolgenden Lysierstufen 17.2 ... 17.n) schraffiert angedeutet ist.

Nach der erwähnten Reaktionszeit wird der Inhalt der ersten Lysierstufe 17.1 über eine sich an den Sumpf der ersten Lysierstufe 17.1 nach unten anschließende Leitung 31.1 in eine zweite Lysierstufe 17.2 überführt, wobei dem aufzubereitenden Klärschlamm auch in der zweiten Lysierstufe 17.2 aus dem Tensidvorrat 18 mittels einer Dosiervorrichtung 19.2 über eine Leitung 20.2 wiederum biologisch abbaubares Tensid zugeführt wird, welches in der zweiten Lysierstufe 17.2 mittels eines Rührwerkes 21.2 innig mit dem Klärschlamm vermischt und ggf. über eine Leitung 25.2 und eine (Sauerstoff)Ringleitung 22.2 mit Sauerstoff angereichert wird. Auch in dieser zweiten Lysierstufe 17.2 werden aufgrund entsprechend dosierter Tensidzugabe(n) wiederum etwa 50 % der jetzt noch lebenden Mikroorganismen lysiert, so daß nach der vorgegebenen, ohne weiteres empirisch zu bestimmenden Reaktionszeit dann bereits etwa 75 % der ursprünglich vorhandenen Mikroorganismen lysiert sind. Die Dosierung der Tensidmenge über die Dosiervorrichtung 19.2 erfolgt unter Berücksichtigung der in der zweiten Lysierstufe 17.2 noch vorhandenen lebenden Mikroorganismen.

Dieses Procedere kann je nach den vorhandenen Einflußgrößen beliebig häufig (n-mal) wiederholt werden, bis der aufzubereitende Klärschlamm mithin letztlich in die letzte/n-te Lysierstufe 17.n gelangt, in welcher die Mikroorganismen und die biologisch abbaubaren Tenside, die in den einzelnen Lysierstufen 17 jeweils aus dem Tensidvorrat 18 dosiert zugegeben worden sind, weitgehend abgebaut sind.

Dabei sei an dieser Stelle darauf verwiesen, daß die Menge der einer Lysierstufe 17 zuzugebenden Tenside auch deshalb von Stufe zu Stufe abnehmen kann, weil - wie bereits ausgeführt - die lysierte Mikroorganismen ein hervorragendes Nahrungsmittel für die noch lebenden Mikroorganismen bilden, und mithin nur dafür gesorgt zu werden braucht, daß sich die noch verbliebenen lebenden Mikroorganismen aufgrund der grenzflächenaktiven Wirkung der Tenside "möglichst rasch bis zum Platzen überfressen".

Der aus der n-ten Lysierstufe 17.n über eine Leitung 31.n abgeführte, aufbereitete Klärschlamm ist mithin erfindungsgemäß im wesentlichen kein solcher mehr, da sowohl die Mikroorganismen als auch die dem Klärschlamm zugemischten Tenside - je nach Anzahl der gewählten Lysierstufen 17 - im wesentlichen zu CO₂ und auch im übrigen unkritischen Stoffen abgebaut sind. Aus der letzten (n-ten) Lysierstufe 17.n wird das Aufbereitungsprodukt über eine Leitung 37 in die Vorklärungsstufe 5 zurückgeführt.

Ggf. kann aus einer Zwischen-Lysierstufe 17.1 bis 17.(n-1) austretendes Austragsgut über eine Leitung 32.1 bis 32. (n-1) und die Leitung 15 in den oberen Abschnitt des Faulturms 7 geleitet werden, wobei noch angemerkt sei, daß sowohl in der Leitung 15 als auch in den Leitungen 31 Pumpen 33 angeordnet sind. Weiterhin sei darauf verwiesen, daß aus den einzelnen Lysierstufen 17.1, 17.2, ... 17.n über Leitungen 34.1 bzw. 34.2 etc. bzw. 34.n aufbereitetes Wasser aus den Lysierstufen 17 abgezogen und über eine Sammelleitung 35 dem Faulturm 7 zugeleitet werden kann, in welcher ebenfalls eine Pumpe 33 angeordnet ist. Außerdem ist in den Leitungen 34 jeweils ein Absperrorgan 36 vorgesehen, um ein Abziehen von Wasser aus den einzelnen Lysierstufen 17 ggf. auch selektiv vornehmen zu können.

Alternativ kann der Auslaß 31.n der letzten Lysierstufe 17.n ggf. auch über die Leitung 37, die in der Zeichnung gestrichelt angedeutet ist, mit einer Leitung 38 verbunden sein, welche den unteren Endabschnitt des Faulturms 7 mit einer Klärschlamm-Entwässerungs-Einrichtung 39 verbindet, um ggf. das aus der letzten Lysierstufe 17.n austretende "Restprodukt" unmittelbar einer Entwässerung und Weiterverwertung ggf. Deponierung (bei 40) zuzuführen.

Wie bereits ausgeführt worden ist, hat sich überdies gezeigt, daß die Raum-/Zeit-Ausbeute des Faulprozesses für den erfindungsgemäß lysierten Klärschlamms - sei es nun bzgl. der ggf. in der über die Leitungen 34 abgezogenen Flüssigkeit, sei es bzgl. des "Endproduktes" einer Zwischen-Lysierstufe 17.(n-1) - erheblich verbessert ist, so daß der Faulturm 7 gegenüber konventionellen Anlagen erheblich kleiner ausgebildet werden kann und die Methanausbeute erheblich größer ist, die letztlich in einen Gasbehälter 41 gelangt, aus dem sie zur Verwendung als Heizmittel nach Bedarf entnommen werden kann.

Es ist ohne weiteres erkennbar, daß mit der vorliegenden Erfindung eine geradezu revolutionäre Möglichkeit geschaffen worden ist, Klärschlamm (d. h. insbesondere Überschuß-Klärschlamm) aus Klärwerken od. dgl. so aufzubereiten/überwiegend zu vernichten, daß - abhängig von den oben erwähnten Einflußgrößen und/oder der Anzahl der Lysierstufen - allenfalls ein Bruchteil des zur Aufbereitung eingesetzten Klärschlamms als Überschuß/Endprodukt verbleibt, so daß mithin u. a. auch die erforderliche Deponiekapazität auf einen Bruchteil zu reduzieren ist und sich dabei überdies noch auf einfachere Weise/mit geringerem Investionsaufwand eine deutlich bessere Raum-/Zeit-Ausbeute an Kohlenwasserstoffgasen, insbesondere Methan, erzielen läßt.

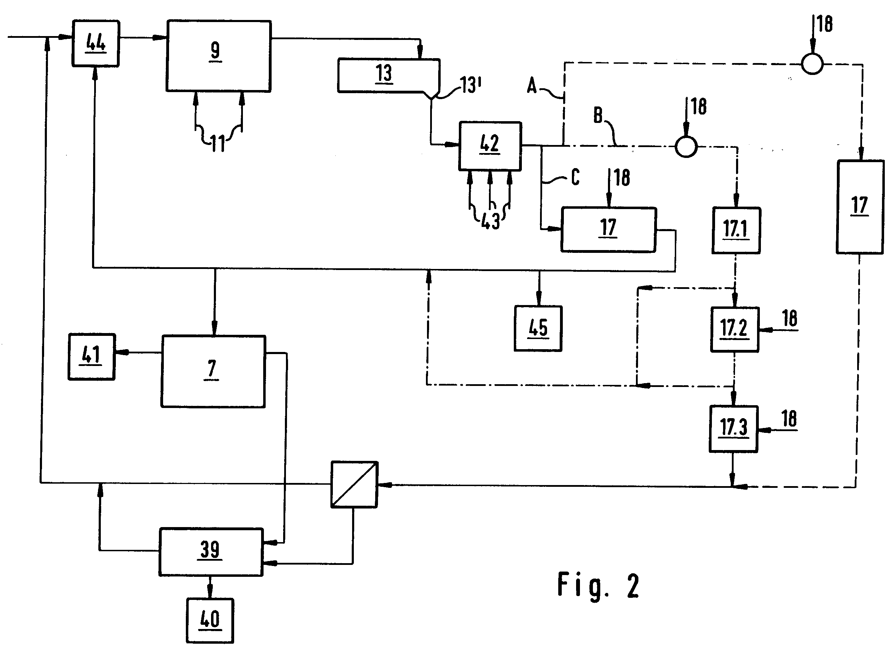

Fig. 2 zeigt ein Blockdiagramm, in dem bevorzugte Varianten der Tensidzuführung sowie der Lysierungsstufe des erfindungsgemäßen Verfahrens schematisch dargestellt sind.

Die Darstellung beschränkt sich auf die in diesem Zusammenhang wichtigen Aufbereitungsschritte, so daß hierbei von der biologischen Reinigungsstufe 9 ausgegangen wird. Das vorgereinigte Abwasser wird wie oben erläutert nach der biologischen Reinigungsstufe 9 einer Nachklärstufe 13 zugeführt. Aus dem Sumpf 13' der Nachklärstufe 13 gelangt der auf zubereitende Klärschlamm über eine Leitung in einen Stabilisator 42, wo er unter Luftzufuhr 43 stabilisiert wird. Die sich hieran anschließende Tensidzuführung sowie Lysierung des Klärschlamms wird im folgenden jeweils einzeln für drei bevorzugte Varianten A-C erläutert.

Bei einer ersten, nicht zur Erfindung gehörenden Variante A (gestrichelte Linie) erfolgt die Dosierung biologisch abbaubarer Tenside zeitdosiert. Dies bedeutet, daß dem auf zubereitenden Klärschlamm auf dem Wege in eine Lysierstufe 17 in bestimmten Zeitintervallen über entsprechend kürzer zu wählende Dosierzeiten t₁ bis tₙ Tenside beigemischt werden, wobei die Tensidzuführung jeweils in der restlichen Zeit eines Intervalls, d.h. jeweils zwischen zwei Dosierzeiten t₁ bis tₙ unterbrochen bzw. abgesperrt ist. Die beigemischte Tensidmenge und die Dosierzeiten t₁ bis tₙ werden in Abhängigkeit von den vorliegenden Verhältnissen/relevanten Einflußgrößen dosiert bzw., gesteuert.

Das in die Lysierstufe 17 weitergeleitete Schlamm-Tensid-Gemisch reagiert dort fortwährend, wobei der Anteil an "aufgeplatzten" (=lysierten) Mikroorganismen durch die Menge der zugegebenen Tenside und die Dosierzeit zu beeinflussen ist. Die infolge der Tensidbeimischung lysierten Mikroorganismen stellen einen hervorragenden Nährstoff für die (zunächst) überlebenden sowie die zwischen zwei Dosierzeiten t₁ bis tₙ, d.h. bei abgesperrter Tensidzuführung, eingeleiteten Mikroorganismen dar. In weiteren Zeitintervallen werden dem Klärschlamm wiederholt Tenside beigemischt, so daß der Anteil an lysierten Mikroorganismen fortwährend zunimmt, bis schließlich eine im wesentlichen vollständige Lysierung und Aufbereitung des Klärschlamms erfolgt.

Im Anschluß an die Lysierstufe 17 wird der lysierte Klärschlamm über Leitungen in eine Bio.-P.-Stufe 44, die der biologischen Reinigungsstufe 9 häufig vorgeordnet ist, zurückgeführt. In der Bio.-P.-Stufe 44 werden i.a. die in lysiertem Klärschlamm enthaltenen kurzkettigen Fettsäuren benötigt, so daß die dort stattfindenden Umwandlungen durch Zuleiten des lysierten Klärschlamms erheblich vereinfacht werden.

Entsprechend der erfindungsgemäßen Variante B (strichpunktierte Linie) wird das Verfahren mehrstufig durchgeführt, wie es bereits unter Bezugnahme auf Fig. 1 erläutert worden ist. Die Zugabe eines biologisch abbaubaren Tensids wird derart dosiert, daß in einer ersten Lysierstufe 17.1 lediglich ein Anteil, beispielsweise 50 % der Mikroorganismen des auf zubereitenden Klärschlamms "aufplatzt" (=lysiert). Dieser Anteil kann nach Wahl des Betreibers auch höher oder niedriger liegen. Der teilweise lysierte, aufzubereitende Klärschlamm wird i.a. in eine zweite Lysierstufe 17.2 überführt, in welcher ihm erneut Tenside - auch hier vorzugsweise Tenside, die biologisch abbaubar sind - zugeführt werden. In der zweiten Lysierstufe 17.2 erfolgt die Dosierung der Tensidmenge unter Berücksichtigung der in der zweiten Lysierstufe 17.2 noch vorhandenen, lebenden Mikroorganismen, so daß auch hier wieder wahlweise ein Anteil von z.B. ca. 50 % lysiert.

Der zunehmend lysierte und aufbereitete Klärschlamm wird nun in eine dritte Lysierstufe 17.3. weitergeleitet, wo ihm wieder eine entsprechend gesteuerte Tensidmenge zugeführt wird. Dieses Procedere kann abhängig von den vorhandenen Einflußgrößen beliebig häufig (n-mal) wiederholt werden, bis der Klärschlamm schließlich in die letzte/n-te Lysierstufe 17.n gelangt. Der Klärschlamm aus der n-ten Lysierstufe 17.n ist im wesentlichen vollständig lysiert und aufbereitet, und kann in eine Bio.-P.-Stufe 44 oder eine biologische Reinigungsstufe 9 zurückgeführt werden.

Es sei darauf hingewiesen, daß aus den Lysierstufen 17.1 bis 17.(n-1) Teile des i. a. erst teilweise lysierten Klärschlamms abgezogen und einer Bio.-P.-Stufe 44 oder einem Faulturm 7 zugeleitet werden können.

Bei einer dritten, nicht zur Erfindung gehörenden Variante C (durchgezogene in Linie) wird durchgeführt. Die Menge des biologisch abbaubaren Tensids, das dem Klärschlamm auf dem Weg in die Lysierstufe 17 beigemischt wird, wird derart dosiert, daß annähernd 100 % der Mikroorganismen lysieren, also "aufplatzen". Dies bedeutet, daß in dieser einen Lysierstufe 17 eine nahezu vollständige Lysierung des aufzubereitenden Klärschlamms erfolgt. Der abgeführte, lysierte Klärschlamm kann ebenfalls in eine Bio.-P.-Stufe 44 zurückgeleitet werden. Aus dem 100 %ig lysierten Klärschlamm können zudem die darin enthaltenen Wirkstoffe, wie insbesondere Aminosäuren und dgl., durch Feststofftrennung/Extraktion 45 abgetrennt und zur Erzeugung von Düngemitteln u. dgl. verwendet werden. Überdies kann aus der Lysierstufe 17 austretendes Abtragsgut abgetrennt und einer Faulstufe 7 zugeführt werden.

### BEZUGSZEICHENLISTE

- 1: Kommune
- 2: Abwasser-Sammelleitung
- 3: Rechen
- 4: Sandfang
- 5: mechanische Verlängerungsstufe
- 6: Leitung (5' ./. 7)
- 7: Faulturm
- 8: Leitung (5 ./. 9)
- 9: biologische Reinigungsstufe
- 10: Rührwerk (in 9)
- 11: Pfeile (= Luft)
- 12: Leitung (9 ./. 13)
- 13: Nachklärstufe 13' - Sumpf (von 13)
- 14: Leitung
- 15: Leitung
- 16: Leitung
- 17: Lysierstufe
- 18: Tensidvorrat
- 19: Dosiervorrichtung
- 20: Leitung (19 ./. 17)
- 21: Rührwerk
- 22: Ringleitung
- 23: Sauerstoffvorrat
- 24: Gebläse
- 25: Leitung
- 26: Mündungsstelle (von 25 in 27)
- 27: "Sauerstoffleitung"
- 28: Absperrorgan
- 29: Absperrorgan
- 30: Absperrorgan
- 31: Leitung
- 32: Leitung
- 33: Pumpen
- 34: Leitungen
- 35: Leitungen
- 36: Absperrorgan
- 37: Leitung
- 38: Leitung
- 39: Klärschlamm-Trocknungseinrichtung
- 40: Deponie
- 41: Gasbehälter

## Patentansprüche

1. Verfahren zum Aufbereiten von aus einer Kläranlage abgetrenntem Klärschlamm mittels Zugabe von Tensiden, insbesondere biologisch abbaubaren Tensiden, dadurch gekennzeichnet, daß in einer ersten Verfahrensstufe (17.1) einer vorgegebenen Klärschlamm-Menge unter gleichzeitiger, im wesentlichen gleichmäßig verteilter Einleitung von Sauerstoff eine auf die Biomasse bezogene Tensidmenge von bis zu 200 mg Tenside pro kg Klärschlamm-Trockensubstanz homogen beigemischt wird, die so groß ist, daß sie zu einer Lysierung eines Anteils, vorzugsweise 50%, der lebenden Mikroorganismen der eingesetzten Klärschlamm-Menge führt, und daß in mindestens einer weiteren Verfahrensstufe (17.2) dem Ausgangsprodukt der vorhergehenden Verfahrensstufe unter gleichzeitiger, im wesentlichen gleichmäßig verteilter Einleitung von Sauerstoff eine auf die Biomasse bezogene Tensidmenge von bis zu 200 mg Tenside pro kg Klärschlamm-Trockensubstanz homogen beigemischt wird, die so groß ist, daß sie zu einer Lysierung eines Anteils, vorzugsweise 50%, der lebenden Mikroorganismen der in der weiteren Verfahrensstufe vorhandenen Klärschlamm-Menge führt.

2. Verfahren nach Anspruch 1, dadurch gekennzeichnet, daß die Vermischung unter Aufbringung von Scherkräften erfolgt.

3. Verfahren nach Anspruch 1 oder 2, dadurch gekennzeichnet, daß bei im wesentlichen vollständiger Lysierung des eingesetzten Klärschlamms das Lysat entweder einer weiteren Aufbereitungsstufe zugeführt und in dieser mit frischem Klärschlamm vermischt oder nach Extraktion einer anderweitigen Verwendung zugeführt wird, insbesondere als Düngemittel, (Flüs-sig)Futter oder Faulschlamm zur Gasausbeute.

4. Verfahren nach einem der vorangehenden Ansprüche, dadurch gekennzeichnet, daß bei einer mehrstufigen Aufbereitung das Endprodukt einer vorhergehenden Stufe (z.B. 17.1) in die nächste Stufe (17.2) überführt und ihm in dieser nächsten Stufe (17.2) eine zweite Klärschlamm-Menge zugeführt wird, die im wesentlichen so groß ist wie mindestens die Menge des im Endprodukt der vorherigen Stufe (17.1) enthaltenen lysierten Anteils; und daß dem aus dem Endprodukt der vorherigen Stufe (17.1) und der zweiten Klärschlamm-Menge bestehenden Inhalt dieser nächsten Stufe (17.2) unter gleichzeitiger, im wesentlichen gleichmäßig verteilter Einleitung von Sauerstoff, eine auf die Biomasse bezogene Tensidmenge im wesentlichen homogen beigemischt wird, die zu einer mindestens 50%-igen TS-Reduzierung durch Lysierung der in diese nächste Stufe (17.2) eingegeben, (noch) nicht lysierten Klärschlamm-Menge führt.

5. Verfahren nach einem oder mehreren der vorhergehenden Ansprüche, dadurch gekennzeichnet, daß dem Klärschlamm die Tenside in Zeitintervallen, d.h. zeitdosiert hinzugefügt werden.

6. Verfahren nach einem oder mehreren der vorhergehenden Ansprüche, dadurch gekennzeichnet, daß die aus einer Lysierstufe (17) separierte Flüssigkeit in eine Faulstufe (7) geleitet wird.

7. Verfahren nach einem oder mehreren der vorhergehenden Ansprüche, dadurch gekennzeichnet, daß der aus einer Lysierstufe (17) abgeführte Klärschlamm in eine biologische Reinigungsstufe (9) bzw. eine der biologischen Reinigungsstufe (9) vorgeordnete Bio.-P.-Stufe (44) zurückgeführt wird.

8. Verfahren nach einem oder mehreren der vorhergehenden Ansprüche, dadurch gekennzeichnet, daß der nach Lysierung in der n-ten Lysierstufe (17.n) aus dieser abgeführte K-lärschlamm entwässert und ggf. deponiert wird.

## Claims

1. A process for the treatment of sewage sludge separated in a sewage works by addition of surfactants, particularly biologically degradable surfactants, characterised in that in a first stage (17.1) of the process, an amount of surfactant depending on the biomass and up to 200 mg surfactants per kg of dry mass of sludge is homogeneously mixed with a preset amount of sewage sludge with simultaneous, substantially uniformly distributed introduction of oxygen, the amount of surfactants being such as to result in lysis of a proportion, preferably 50%, of the living microorganisms in the amount of sludge used, and in that in at least one further stage (17.2) a quantity of surfactant depending on the biomass and up to 200 mg of surfactants per kg of dry mass in the sludge is homogeneously mixed with the product from the previous stage in the process with simultaneous, substantially uniformly distributed introduction of oxygen, the amount being sufficient to result in lysis of a proportion, preferably 50%, of the living microorganisms in the amount of sludge present in the further stage.

2. A process according to claim 1, characterised in that mixing is brought about by application of shearing forces.

3. A process according to claim 1 or 2, characterised in that when the sewage sludge has been substantially completely lysed, the lysate is fed to an additional treatment stage where it is mixed with fresh sewage sludge or is extracted and supplied for a different use, particularly as a fertiliser (liquid animal feed) or digested sludge for gas production.

4. A process according to any of the preceding claims, characterised in that in the case of multistage treatment, the end-product from a previous stage (e.g. 17.1) is transferred to the next stage (17.2) and in the said next stage (17.2) a second amount of sludge is added thereto and is substantially at least as large as the amount of the lysed portion in the end product from the previous stage (17.1) and in that an amount of surfactant depending on the biomass is substantially homogeneously mixed, with simultaneous, substantially uniformly distributed introduction of oxygen, with the contents of the said next stage (17.2) consisting of the end product from the previous stage (17.1) and the second amount of sludge, the amount resulting in at least 50% reduction of dry mass by lysis of the amount of not (yet) lysed sludge input into the said next stage (17.2).

5. A process according to one or more of the preceding claims, characterised in that the surfactants are added to the sludge in time intervals, i.e. are metered in respect of time.

6. A process according to one or more of the preceding claims, characterised in that the liquid separated from a lysing stage (17) is fed to a digestion stage.

7. A process according to one or more of the preceding claims, characterised in that the sludge withdrawn from a lysing stage (17) is returned to a biological purification stage (9) or a bio.-P. stage (44) preceding the biological purification stage (9).

8. A process according to one or more of the preceding claims, characterised in that the sludge separated from the n^{th} lysing stage (17.n) after lysis therein is dewatered and dumped if required.

## Revendications

1. Procédé pour le traitement d'une boue de curage, séparée d'une station d'épuration, au moyen d'un ajout de dérivés tensioactifs, notamment de dérivés tensioactifs biodégradables, caractérisé en ce que, dans un premier étage de procédé (17.1), on ajoute de manière homogène à une quantité de boue de curage prescrite, en introduisant en même temps de l'oxygène de manière globalement régulièrement répartie, une quantité de dérivés tensioactifs se rapportant à la biomasse et allant jusqu'à 200 mg de dérivés tensioactifs par kg de matière sèche de boue de curage, laquelle quantité est si grande qu'elle conduit à une lyse d'une proportion, de préférence 50 %, des micro-organismes vivants de la quantité de boue de curage introduite et en ce que, dans au moins un autre étage de procédé (17.2), on ajoute de manière homogène au produit de sortie de l'étage de procédé précédent, en introduisant en même temps de l'oxygène de manière globalement régulièrement répartie, une quantité de dérivés tensioactifs se rapportant à la biomasse et allant jusqu'à 200 mg de dérivés tensioactifs par kg de matière sèche de boue de curage, laquelle quantité est si grande qu'elle conduit à une lyse d'une proportion, de préférence 50 %, des micro-organismes vivants de la quantité de boue de curage présente dans l'autre étage de procédé.

2. Procédé selon la revendication 1, caractérisé en ce que le mélange s'effectue en appliquant aussi des forces de cisaillement.

3. Procédé selon la revendication 1 ou 2, caractérisé en ce que, dans le cas d'une lyse sensiblement complète de la boue de curage introduite, on envoie le résultat de la lyse à un autre étage de traitement et on le mélange dans celui-ci à de la boue de curage fraîche ou on l'envoie après extraction à une utilisation d'un autre type, notamment comme substance fertilisante, aliment (liquide) ou boue putréfiée pour une production de gaz.

4. Procédé selon l'une des revendications précédentes, caractérisé en ce que, dans le cas d'un traitement en plusieurs étapes, on transfère le produit final d'un étage précédent (par exemple 17.1) dans l'étage suivant (17.2) et on lui envoie dans cet étage suivant (17.2) une deuxième quantité de boue de curage qui est sensiblement au moins aussi grande que la quantité de la proportion détruite par lyse et contenue dans le produit final de l'étage précédent (17.1) ; et en ce qu'on ajoute de manière globalement homogène au contenu, constitué du produit final de l'étage précédent (17.1) et de la deuxième quantité de boue de curage, de cet étage suivant (17.2), en introduisant en même de l'oxygène de manière globalement régulièrement répartie, une quantité de dérivés tensioactifs se rapportant à la biomasse et conduisant à une réduction de matière sèche TS d'au moins 50 % par une lyse de la quantité de boue de curage introduite dans cet étage suivant (17.2) et non (encore) détruite par lyse.

5. Procédé selon une ou plusieurs des revendications précédentes, caractérisé en ce qu'on ajoute à la boue de curage les dérivés tensioactifs pendant certains intervalles de temps, c'est-à-dire selon un dosage dans le temps.

6. Procédé selon une ou plusieurs des revendications précédentes, caractérisé en ce qu'on conduit dans une tour de putréfaction (7) le liquide séparé d'un étage de lyse (17).

7. Procédé selon une ou plusieurs des revendications précédentes, caractérisé en ce qu'on renvoie la boue de curage évacuée d'un étage de lyse (17) à un étage d'épuration biologique (9) ou à un étage de type Bio.-P. (44) agencé en amont de l'étage d'épuration biologique (9).

8. Procédé selon une ou plusieurs des revendications précédentes, caractérisé en ce qu'on dessèche la boue de curage évacué du n-ième étage de lyse (17.n) après la lyse dans celui-ci et on la dépose le cas échéant dans une décharge.
